# EUROPÄISCHE PATENTSCHRIFT

(11) **EP 1 297 063 B1**
(45) Veröffentlichungstag und Bekanntmachung des Hinweises auf die Patenterteilung: **18.07.2007**
(21) Anmeldenummer: 01945169.9
(22) Anmeldetag: 21.05.2001
(51) Int. Cl.: C08K 5/523, C08K 5/521, C08L 69/00

(54) **FLAMMWIDRIGE TRANSLUZENTE POLYCARBONAT-FORMMASSEN**
NON-INFLAMMABLE, TRANSLUCENT POLYCARBONATE MOLDING MATERIALS
MATIERES MOULABLES EN POLYCARBONATE TRANSLUCIDES ET ININFLAMMABLES

(30) Priorität: 02.06.2000 DE 10027341
(43) Veröffentlichungstag der Anmeldung: 02.04.2003
(73) Patentinhaber: Bayer MaterialScience AG, 51368 Leverkusen (DE)
(72) Erfinder: DERR, Torsten, 41541 Dormagen (DE); ECKEL, Thomas, 41540 Dormagen (DE); ZOBEL, Michael, 50825 Köln (DE); WITTMANN, Dieter, 51375 Leverkusen (DE); SEIDEL, Andreas, 41542 Dormagen (DE)
(74) Vertreter: Perchenek, Nils
(86) Internationale Anmeldenummer: PCT/EP2001/005782
(87) Internationale Veröffentlichungsnummer: WO 2001/092399

(56) Entgegenhaltungen:
- EP-A- 0 173 869
- EP-A- 0 682 081
- DE-A- 19 734 667
- PATENT ABSTRACTS OF JAPAN vol. 2000, no. 07, 29. September 2000 (2000-09-29) & JP 2000 109670 A (MITSUBISHI ENGINEERING PLASTICS CORP), 18. April 2000 (2000-04-18)
- JÜRGEN FALBE, MANFRED REGITZ: "Römpp Chemie Lexikon" 1990, GEORG THIEME VERLAG , STUTTGART * NEW YORK * Seite 791 *

## Beschreibung

Die vorliegende Erfindung betrifft flammwidrige transluzente Polycarbonat-Formmassen, enthaltend Oligophosphate und spezielle, fluorierte Polyolefine, die einen ausgezeichneten Flammschutz und optische Eigenschaften (Transluzenz) sowie gute Chemikalienbeständigkeit aufweisen.

US-A 4 220 583 beschreibt transluzente flammgeschützte Polycarbonat-Formmassen, die geringe Mengen an teilweise fluorierten Polyolefine sowie geringe Mengen an organischen Alkali- oder Erdalkalisalze enthalten und gute Zähigkeit aufweisen.

EP-A 415 072 beschreibt transparente flammgeschützte Polycarbonat-Formmassen, die mit Silylarylsiloxy-Einheiten flammfest ausgerüstet wurden.

Die Formmassen gemäß US-A 4 220 583 und EP-A 415 072 zeigen jedoch nicht immer eine zufriedenstellende Eigenschaftskombination hinsichtlich des Fließverhaltens, Verarbeitungsverhalten und der Chemikalienbeständigkeit.

EP-A 173 856 offenbart Polycarbonat-Formmassen, die spezielle thermoplastische Polycarbonate auf Basis tetraalkylierter Diphenole, aromatische Phosphatester und Tetrafluorethylenpolymerisate enthalten. Es wird beschrieben, dass bei Zusatz von Polytetrafluorethylen transluzente Mischungen erzielt werden können. Die Formmassen weisen Nachteile hinsichtlich des Fließverhaltens und der Chemikalienbeständigkeit auf.

DE-A- 197 34 66173 869 offenbart Zusammensetzungen enthaltend (A) aromatisches Polycarbonat, (B) gegebenenfalls Vinyl(Co)polymerisat, (C) Pfropfpolymerisat (D) Oligophosphate gemäß Formel (I). (E) Polytetrafluorethylen, welches als koagulierte Mischung mit Pfropfpoylmerisat eingesetzt wird und (F) anorganisches Verstärkungsmaterial (Seite 2, Zeile 59 - 60).

Aufgabe der vorliegenden Erfindung ist es, flammgeschützte PC-Formmassen bereitzustellen, welche sich durch ein hohes Maß an Flammschutz, insbesondere kurze Nachbrennzeiten, gutes Verarbeitungsverhalten und gute mechanische Eigenschaften sowie transluzente Eigenschaften auszeichnen. Damit sind diese Formmassen insbesondere für solche Anwendungen geeignet, bei denen Kontakt mit speziellen Medien wie z.B. Lösungsmittel, Schmiermittel, Reinigungsmittel usw. auftreten kann.

Es wurde nun gefunden, dass modifizierte Polycarbonat-Formmassen, die Oligophoshphate und spezielle Zubereitungen von fluorierten Polyolefinen enthalten, das gewünschte Eigenschaftsprofil aufweisen.

Gegenstand der Erfindung sind daher Polycarbonat-Zusammensetzungen, enthaltend
A) 70 bis 99,5, vorzugsweise 80 bis 99, insbesondere 85 bis 98,5 Gew.-Teile Polycarbonat und
B) 0,5 bis 18, vorzugsweise 0,7 bis 15, insbesondere 0,9 bis 11 Gew.-Teile Phosphorverbindungen der Formel (I) 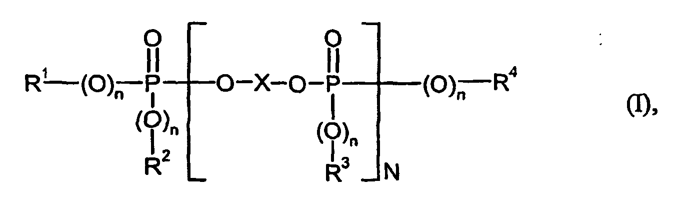 worin
   - R¹, R², R³ und R⁴: unabhängig voneinander jeweils C₁- bis C₈-Alkyl, jeweils gegebenenfalls durch Alkyl substituiertes C₅- bis C₆-Cycloalkyl, C₆- bis C₂₀-Aryl oder C₇- bis C₁₂-Aralkyl,
   - n: unabhängig voneinander 0 oder 1,
   - N: eine Zahl zwischen 0,1 und 10,
   - X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten,
   und
   C.1) als koagulierte Mischung mit mindestens einem Vinyl(Co)polymer, wobei das fluorierte Polyolefin C bzw. Polyolefingemisch als Emulsion mit mindestens einer Emulsion der Komponenten gemischt und anschließend koaguliert wird,
      oder
   C.2) als Masterbatch mit mindestens einem Vinyl(co)polymer, wobei das fluorierte Polyolefin C als Pulver mit einem Pulver oder einem Granulat des Vinyl(co)polymers vermischt und in der Schmelze, im Allgemeinen bei Temperaturen von 208°C bis 330°C in den üblichen Aggregaten wie Innenkneter, Extruder oder Doppelwellenschnecken, compoundiert wird,
      oder
   C.3) in Form einer Zubereitung welche dadurch erhalten wird, dass geeignete Vinylmonomere in Gegenwart von fluorierten Polyolefin-Emulsionen polymerisiert werden,
   mit der Maßgabe, daß die eingesetzten Vinyl(co)polymere harzartig, thermoplastisch und kautschukfrei sind, und
D) gegebenenfalls weitere Zusatzstoffe ausgewählt aus mindestens einem aus der Gruppe bestehend aus feinstteiligen anorganischen Verbindungen, Füll- und Verstärkungsstoffen, Gleit-und Entformungsmittel, Nukleiermittel, Antistatika, Stabilisatorem, Farbstoffe und Pigmente.

Die Summe der Gewichtsteile aller Komponenten ergibt 100.

Unter Transluzenz wird im erfindungsgemäßen Sinne die Eigenschaft verstanden, Licht durch ein Material zwar durchzulassen, es aber durch kleine feste, lichtundurchlässige Partikel im Material so abzulenken, dass Objekte hinter dem Material nicht mehr klar zu erkennen sind. Je nach Konzentration der lichtundurchlässigen Partikel im Material gibt es daher schwache bis starke Transluzenz. Transluzente Materialien sind immer lichtdurchlässig. Transparente Materialien würden Licht unabgelenkt und ungestreut durchlassen (glasähnlich).

Erfindungsgemäß wird Transluzenz in 5 Stufen klassifiziert (von (0) transparent bis (4) lichtundurchlässig) mit jeweils abnehmender Transparenz bzw. zunehmender Transluzenz.
(0) nicht transluzent (voll transparent, durchscheinend wie Glas oder reines Polycarbonat (komplett durchsichtig)
(1) minimal transluzent (fast transparent, fast durchscheinend wie Glas, wenige feste Partikel erkennbar)
(2) schwach transluzent (leicht milchig, aber noch transparent)
(3) transluzent (milchig, aber noch transparent)
(4) nicht transluzent, nicht transparent (lichtundurchlässig)

Zusammensetzungen, die die Klassen (1) bis (3) aufweisen sind erfindungsgemäß. D.h. man kann Objekte, z.B. ein Schriftstück, das hinter einer 3,2 mm starken Probe des Materials liegt problemlos lesen. Desweiteren könnte man beim Einsatz des Materials in DV-Gehäusen (z.B. Mobiltelefone, Computer, Monitore, Drucker) einer Wandstärke von 3,2 mm, das Innenleben eines Gerätes noch klar erkennen.

Die erfindungsgemäßen Zusammensetzungen zeichnen sich durch eine optimale Eigenschaftskombination zwischen Transluzenz und Transparenz aus und sind in der Bewertung in die Klassen (1) bis (3) eingeteilt. Besonders bevorzugte Zusammensetzungen sind solche, die die Bewertung (1) und (2) aufweisen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II) 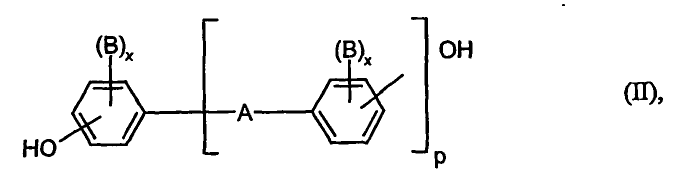 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 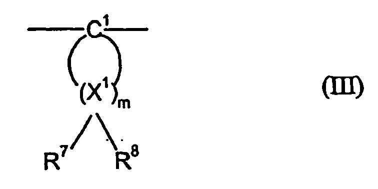 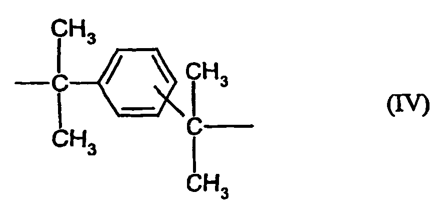
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁷ und R⁸: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R⁷ und R⁸ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2, 4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid bei 25°C).

Die thermoplastischen, aromatischen Polycarbonate und Polyestercarbonate können allein oder im beliebigen Gemisch untereinander eingesetzt werden.

### Komponente B

Die erfindungsgemäßen Formmassen enthalten als Flammschutzmittel Phosphorverbindungen gemäß Formel (I), 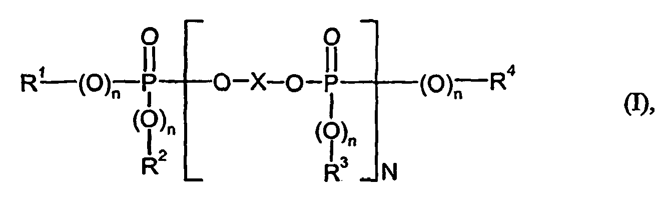 in der die Reste die o.g. Bedeutungen haben.

Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁-C₄-Alkyl substituiert sein. Besonders bevorzugte Aryl-Reste sind Kresyl, Phenyl, Xylenyl, Propylphenyl oder Butylphenyl.
- X: in der Formel (I) bedeutet bevorzugt einen ein- oder mehrkernigen aromatischen Rest mit 6 bis 30 C-Atomen. Dieser leitet sich bevorzugt von Diphenolen der Formel (II) ab.
- n: in der Formel (I) ist vorzugsweise gleich 1.
- N: kann Werte von 0,1 bis 10 annehmen, bevorzugt sind Werte von 0,7 bis 5, besonders bevorzugt 0,7 bis 3, insbesondere 0,9 bis 1,5. Als erfindungsgemäße Komponente B können auch Mischungen verschiedener Phosphate gemäß Formel (I) eingesetzt werden. In diesem Fall kann N die oben genannten Werte als Durchschnittswerte annehmen. In den Gemischen können auch Monophosphorverbindungen (N=0) enthalten sein.

Monophosphorverbindungen der Formel (I) sind insbesondere Tributylphosphat, Triphenylphosphat, Trikresylphosphat, Diphenylkresylphosphat, Diphenyloctyl-phosphat, Diphenyl-2-ethylkresylphosphat, Tri-(isopropylphenyl)-phosphat, Methylphosphonsäuredimethylester, Methylphosphensäurediphenylester, Phenylphosphonsäurediethylester, Triphenylphosphinoxid oder Trikresylphosphinoxid. Besonders bevorzugte Monophosphorverbindung ist Triphenylphosphat.

Die gemittelten N-Werte können bestimmt werden, indem mittels geeigneter Methode (Gaschromatographie (GC), High Pressure Liquid Chromatography (HPLC), Gelpermeadonschromatographie (GPC)) die Zusammensetzung der Phosphat-Mischung (Molekulargewichtsverteilung) bestimmt wird und daraus die Mittelwerte für N berechnet werden.
- X: steht besonders bevorzugt für 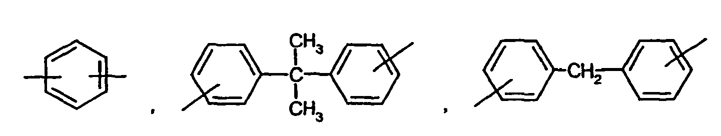 oder

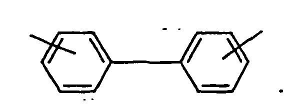

Die Phosphorverbindungen gemäß Komponente B, Formel (I) sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

### Komponente C

Die fluorierten Polyolefine C sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im Allgemeinen haben die fluorierten Polyolefine E eine Dichte von 1,2 bis 2,3 g/cm³. Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z.B. US-Patent 2 393 967). Je nach Einsatzforin kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine C werden in Form von Emulsion mit mittleren Teilchendurchmesser von 0,05 bis 20 µm, vorzugsweise 0,08 bis 10 µm, und eine Dichte von 1,2 bis 1,9 g/cm³ oder in Form von Pulver mit mittleren Teilchendurchmesser von 100 bis 1 000 µm und Dichten von 2,0 g/cm³ bis 2,3 g/cm³ eingesetzt.

Erfindungsgemäß werden die fluorierten Polyolefine C in Form spezieller Zubereitungen eingesetzt:
C.1) als koagulierte Mischung mit mindestens einem Vinyl(Co)polymer, wobei das fluorierte Polyolefin C bzw. Polyolefingemisch als Emulsion mit mindestens einer Emulsion der Komponenten gemischt und anschließend koaguliert wird.
   oder
C.2) als Masterbatch mit mindestens einem Vinyl(co)polymer, wobei das fluorierte Polyolefin C als Pulver mit einem Pulver oder einem Granulat des Vinyl(co)polymers vermischt und in der Schmelze, im Allgemeinen bei Temperaturen von 208°C bis 330°C in den üblichen Aggregaten wie Innenkneter, Extruder oder Doppelwellenschnecken, compoundiert wird.

Erfindungsgemäße Komponenten C können auch dadurch erhalten werden, dass geeignete Vinylmonomere in Gegenwart von fluorierten Polyolefin-Emulsionen polymerisiert werden.

Geeignet sind als Vinyl(co)Polymerisate Polymerisate von mindestens einem Monomeren aus der Gruppe der Vinylaromaten, Vinylcyanide (ungesättigte Nitrile), (Meth)Acrylsäure-(C₁-C₈)-Alkylester ; ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kemsubstituierten Vinylaromaten wie beispielsweise Styrol, α-Methylstyrol, p-Methylstyrol, p-Chlorstyrol) und/oder Methacrylsäure-(C₁-C₈)-Alkylester wie z.B. Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate sind harzartig, thermoplastisch und kautschukfrei.

Besonders bevorzugt ist das Copolymerisat aus C.1.1 Styrol und C.1.2 Acrylnitril.

Die (Co)Polymerisate sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte M̅_{w} (Gewichtsmittel, ermittelt durch Lichtstreuung oder Sedimentation) zwischen 15 000 und 200 000.

Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Bevorzugt sind reine PTFE-Pulver (PTFE = Polytetrafluorethylen) oder PTFE-Zubereitungen mit hohem PTFE-Anteil.

Geeignete Tetrafluorethylenpolymerisat-Emulsionen sind handelsübliche Produkte und werden beispielsweise von der Firma DuPont (Wilmington, Delaware,USA) als Teflon^{®} 30 N oder von der Firma Dyneon GmbH (Burgkichen, Deutschland) als Hostaflon^{®} angeboten.

Im Masterbatch liegt das Gewichtsverhältnis von Vinyl(co)Polymerisat zum fluorierten Polyolefin bei 95:5 bis 5:95, vorzugsweise 70:30 bis 30:70. Besonders bevorzugt beträgt der PTFE-Gehalt >40 % und <70 %.

Geeignete fluorierte Polyolefin-Pulver sind handelsübliche Produkte und werden beispielsweise von der Firma DuPont als Teflon^{®} CFP 6000 N oder von der Firma Dyneon GmbH (Burgkichen, Deuthschland) als Hostaflon^{®} TF 2071 angeboten.

Die erfindungsgemäßen Zusammensetzungen können weitere Zusatzstoffe und Polymere oder Gemische hieraus, wobei die Auswahl der Zusatzstoffe und Polymere so getroffen wird, dass diese die Transluzenz der Fommasse und das gewünschte Eigenschaftsprofil nicht wesentlich beeinträchtigen. Besonders vorteilhaft sind solche Polymere oder Copolymere, die mit Polycarbonat mischbar sind. Im Folgenden sind einige mögliche Zusatzstoffe aufgeführt.

Die erfindungsgemäßen Zusammensetzungen können feinstteilige anorganische Verbindungen enthalten. Diese anorganischen Verbindungen umfassen Verbindungen eines oder mehrerer Metalle der 1. bis 5. Hauptgruppe oder der 1. bis 8. Nebengruppe des Periodensystems, bevorzugt der 2. bis 5. Hauptgruppe oder der 4. bis 8. Nebengruppe, besonders bevorzugt der 3. bis 5. Hauptgruppe oder der 4. bis 8. Nebengruppe mit den Elementen Sauerstoff, Schwefel, Bor, Phosphor, Kohlenstoff, Stickstoff, Wasserstoff und/oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, TiO₂, SnO₂, WC, ZnO, Al₂O₃, AlO(OH), ZrO₂, Sb₂O₃, Eisenoxide, NaSO₄ BaSO₄, Vanadiumoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofallung von Dispersionen der Komponenten B oder C mit Dispersionen, Suspensionen, Pasten oder Solen der feinstteiligen anorganischen Materialien dar.

Die erfindungsgemäßen Formmassen können weiterhin wenigstens eines der üblichen Additive, wie Gleit- und Entformungsmittel, beispielsweise Pentaerythrittetrastearat, Nukleiermittel, Antistatika, Stabilisatoren, Füll- und Verstärkungsstoffe sowie Farbstoffe und Pigmente enthalten, sofern das gewünschte Eigenschaftsprofil nicht nachteilig beeinflusst wird.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten, sofern das gewünschte Eigenschaftsprofil nicht negativ beeinflusst wird. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt. Als Flammschutzmittel können weiterhin auch Monophosphatverbindungen, oligomere Phosphatverbindungen der Mischungen davon eingesetzt werden. Solche Phosphorverbindungen sind in EP-A 363 608, EP-A 345 522 und DE-OS 197 21 628 beschrieben.

Die erfindungsgemäßen Formmassen enthaltend die Komponenten A bis C und gegebenenfalls weiteren bekannten Zusätzen wie Stabilisatoren, Farbstoffen, Pigmenten, Gleit- und Entformungsmitteln, Nukleiermittel sowie Antistatika, Füll- und Verstärkungsstoffe werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, vorzugsweise in Extrudern.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die Formmassen der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge, Gehäuse von Kleintransformatoren enthaltenden Elektrogeräten, Gehäuse für Geräte zur Informationsverbreitung und - Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Polycarbonat auf Basis Bisphenol A mit einer relativen Lösungsviskosität von 1,278, gemessen in Methylenchlorid bei 25°C und in einer Konzentration von 0,5 g/100 ml.

### Komponente B

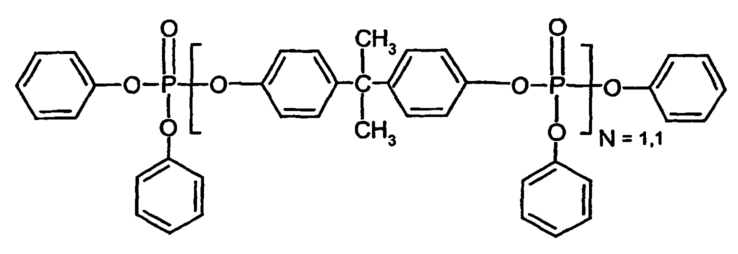

Zur Bestimmung des angegebenen zahlengemittelten N-Wertes wurden zuerst die Anteile der oligomeren Phosphate durch HPLC-Messungen bestimmt:

| | |
|---|---|
| Säulentyp: | LiChrosorp RP-8 |
| Elutionsmittel im Gradienten: | Acetonitril/Wasser 50:50 bis 100:0 |
| Konzentration: | 5 mg/ml |

Aus den Anteilen der einzelnen Komponenten (Mono- und Oligophosphate) wurde dann nach bekannten Verfahren der zahlengewichteten N-Mittelwert berechnet.

### Komponente C

| | |
|---|---|
| C.1 Blendex ^{®} 449: | PTFE-Präparat der Firma General Electric Plastics aus 50 Gew.-% PTFE und 50 Gew.-% Styrol/Acrylnitril-Copolymer. |
| C.2: | PTFE-Pulver Teflon CFP 6000 N (DuPont, Wilmington, Dellawere, USA) |

### Herstellung und Prüfung der erfindungsgemäßen Formmassen

Das Mischen der Komponenten mit den üblichen Verarbeitungshilfsmitteln erfolgt auf einer Doppelwellenextruder ZSK 25. Die Formkörper werden auf einer Spritzgießmaschine Typ Arburg 270E bei 260°C hergestellt.

Die Bestimmung der Kerbschlagzähigkeit erfolgt nach Methode ISO 180 1A an Stäben der Abmessung 80 x 10 x 4 mm³ bei Raumtemperatur.

Die Bestimmung der Wärmeformbeständigkeit nach Vicat B erfolgt gemäß DIN 53 460 an Stäben der Abmessung 80 x 10 x 4 mm³.

Die Flammwidrigkeit wird nach UL 94V bestimmt, die Gesamtnachbrennzeit wird ebenfalls nach UL 94 V bestimmt.

Das Spannungsrissverhalten (ESC-Verhalten) wird an Stäben der Abmessung 80 x 10 x 4 mm, Presstemperatur 220°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung εₓ in Prozent) und bei Raumtemperatur im Testmedium gelagert. Das Spannungsrissverhalten wird über die Rissbildung bzw. den Bruch-in Abhängigkeit von der Vordehnung im Testmedium beurteilt.

Die MVR-Messung (melt-volume-rate) (240/5) [cm³/10 min] erfolgt nach ISO 1133. Die Messung der Viskosität erfolgt nach DIN 54 811.

**Tabelle 1**

| **Zusammensetzung und Eigenschaften der Formmassen** | | | | | |
|---|---|---|---|---|---|
| | **Vgl. 1** | **Vgl. 2** | **Vgl. 3** | **Beispiel 1** | **Beispiel 2** |
| A | 100 | 95 | 93 | 92,5 | 96,1 |
| B | - | 6 | 6 | 5,5 | 3,25 |
| C-1 | - | - | - | 0,5 | 0,25 |
| C-2 | - | - | 1 | - | - |
| Vicat B 120 [°C] | 144,4 | 124,9 | 124,3 | 125,9 | 133 |
| aₖ ISO 180 1A [kJ/m²] RT | 10,9 | 6,4 | 6,5 | 6,9 | 6,3 |
| ESC-Verhalten Bruch bei Ex [%] | 0,6 | 0,4 | 0,4 | 0,4 | 0,6 |
| Bewertung 1,6 mm UL 94 V Gesamtnachbrennzeit [sec.] | V2 54 | n.b.* | V0 6 | V0 17 | V0 14 |
| MVR | 7,9 | 17,85 | 14,6 | 14,9 | - |
| Viskosität 260°C 1 000 Pa.s⁻¹ | 584 | 365 | 370,0 | 403 | - |
| Transluzenz | 0 transparent | 0 transparent | 4 undurchsichtig | 1 erfindungsgemäß | 3 erfindungsgemäß |

| | | | | | |
|---|---|---|---|---|---|
| * n.b. = nicht bestanden | | | | | |

Die erfindungsgemäßen Formmassen (Beispiel 1 und 2) zeigen die gewünschte Eigenschaftskombination aus exzellentem Flammschutz, guten mechanischen Eigenschaften, einem guten Fließverhalten bei ausgezeichneten optischen Eigenschaften (Transluzenz). Vergleichsbeispiel 1 und 2 (ohne PTFE) zeigen zwar hervorragende Transparenz, bieten aber keinen ausreichenden Flammschutz. Vergleichsbeispiel 3 (mit reinem PTFE-Pulver) ist zwar ausgezeichnet flammwidrig jedoch nicht transparent/transluzent.

## Patentansprüche

1. Zusammensetzung bestehend aus
A) 70 bis 99,5 Gew.-Teile Polycarbonat,
B) 0,5 bis 18 Gew.-Teile Phosphorverbindung der Formel (I) 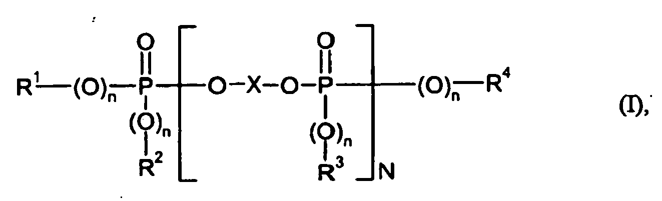 worin
R¹, R², R³ und R⁴ unabhängig voneinander jeweils C₁- bis C₈-Alkyl, jeweils gegebenenfalls durch Alky substituiertes C₅- bis C₆-Cycloalkyl, C₆- bis C₂₀-Aryl oder C₇- bis C₁₂-Aralkyl,
n unabhängig voneinander, 0 oder 1
N eine Zahl zwischen 0,1 und 10,
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten,
C) 0,01 bis 0,7 Gew.-Teile fluoriertes Polyolefin
C.1) als koagulierte Mischung mit mindestens einem Vinyl(Co)polymer, wobei das fluorierte Polyolefin C bzw. Polyolefingemisch als Emulsion mit mindestens einer Emulsion der Komponenten gemischt und anschließend koaguliert wird,
oder
C.2) als Masterbatch mit mindestens einem Vinyl(co)polymer, wobei das fluorierte Polyolefin C als Pulver mit einem Pulver oder einem Granulat des Vinyl(co)polymers vermischt und in der Schmelze, im Allgemeinen bei Temperaturen von 208°C bis 330°C in den üblichen Aggregaten wie Innenkneter, Extruder oder Doppelwellenschnecken, compoundiert wird,
oder
C.3) in Form einer Zubereitung welche **dadurch** erhalten wird, dass geeignete Vinylmonomere in Gegenwart von fluorierten Polyolefin-Emulsionen polymerisiert werden,
mit der Maßgabe, daß die eingesetzten Vinyl(co)polymere harzartig, thermoplastisch und kautschukfrei sind, und
D) gegebenenfalls weitere Zusatzstoffe ausgewählt aus mindestens einem aus der Gruppe bestehend aus feinstteiligen anorganischen Verbindungen, Füll- und Verstärkungsstoffen, Gleit-und Entformungsmittel, Nukleiermittel, Antistatika, Stabilisatoren, Farbstoffe und Pigmente.

2. Zusammensetzung gemäß Anspruch 1 enthaltend 80 bis 99 Gew.-Teile Polycarbonat.

3. Zusammensetzung gemäß Anspruch 1 oder 2 enthaltend 0,7 bis 15 Gew.-Teile Phosphorverbindung der Formel (I).

4. Zusammensetzung gemäß Anspruch 1 bis 3 enthaltend 0,05 bis 0,5 Gew.-Teile fluoriertes Polyolefin.

5. Zusammensetzung gemäß Anspruch 1 bis 4, enthaltend fluoriertes Polyolefin, wobei das fluorierte Polyolefin als Pulver in Form einer koagulierten Mischung mit mindestens einem Vinyl(co)polymer oder in Form eines Präcompounds oder Masterbatchs zugesetzt wurde.

6. Zusammensetzung gemäß Anspruch 1 bis 5, enthaltend Phosphorverbindungen der Formel (I), worin R¹, R², R³ und R⁴ unabhängig voneinander für C₁-C₄-Alkyl, Phenyl, Naphthyl oder Phenyl-C₁-C₄-alkyl stehen und die aromatischen Gruppen unsubstituiert oder substituiert sein können.

7. Zusammensetzung gemäß Anspruch 1 bis 6, enthaltend Phosphorverbindungen der Formel (I), worin X sich von Diphenolen der Formel (II) ableitet: 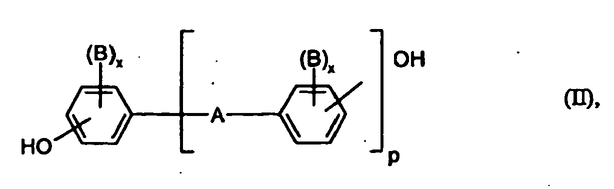 wobei
A eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 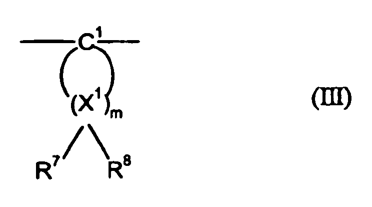 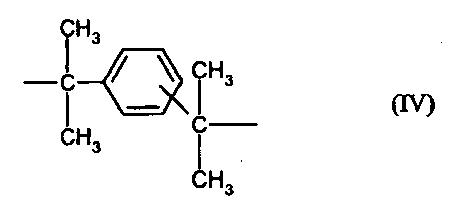
B jeweils C₁-C₁₂-Alkyl oder Halogen,
x jeweils unabhängig voneinander 0, 1 oder 2,
p 1 oder 0 sind, und
R⁷ und R⁸ für jedes X¹ individuell wählbar, unabhängig voneinander Wasserstoff oder C₁-C₆-Alkyl,
X¹ Kohlenstoff und
m eine ganze Zahl von 4 bis 7 bedeuten,
mit der Maßgabe, dass an mindestens einen Atom X¹, R⁷ und R⁸ gleichzeitig Alkyl sind.

8. Zusammensetzung gemäß Anspruch 1 bis 7, enthaltend Phosphorverbindungen der Formel (I), worin N 0,7 bis 5 bedeutet.

9. Zusammensetzung gemäß Anspruch 1 bis 8, enthaltend Phosphorverbindungen der Formel (I), worin N 0,7 bis 3 bedeutet.

10. Zusammensetzung gemäß Anspruch 1 bis 9, enthaltend eine Mischung von Phosphaten gemäß Formel (I).

11. Zusammensetzung gemäß Anspruch 1 bis 6, wobei X in Formel (I) für 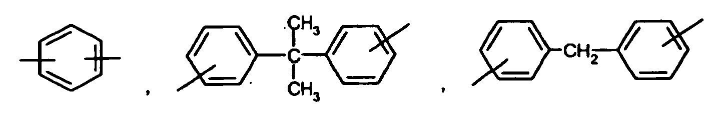 oder 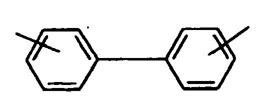 steht.

12. Zusammensetzung gemäß Anspruch 1 bis 11, enthaltend als Komponente B eine Mischung aus Tributylphosphat, Triphenylphosphat, Trikresylphosphat, Diphenylkresylphosphat, Diphenyloctyl-phosphat, Diphenyl-2-ethylkresylphosphat, Tri-(isopropylphenyl)-phosphat, Methylphosphonsäuredimethylester, Methylphosphensäurediphenylester, Phenylphosphonsäurediethylester, Triphenylphosphinoxid oder Trikresylphosphinoxid mit Oligophosphaten, wobei der in Anspruch 1 für N angegebene Bereich den Durchschnittswert der Mischung bezeichnet.

13. Zusammensetzung gemäß Anspruch 1 bis 12, enthaltend 0,05 bis 0,5 Gew.-Teile Komponente C.

14. Verfahren zur Herstellung der Zusammensetzungen gemäß Anspruch 1 bis 13, wobei man die einzelnen Komponenten vermischt und compoundiert.

15. Verwendung der Zusammensetzungen gemäß Anspruch 1 bis 13 zur Herstellung von Formkörpern und Formteilen.

16. Formkörper und Formteile, erhältlich aus Zusammensetzungen gemäß der Ansprüche 1 bis 13.

## Claims

1. Composition comprising
A) 70 to 99.5 parts by wt. of polycarbonate and
B) 0.5 to 18 parts by wt. of phosphorus compound of the formula (I) 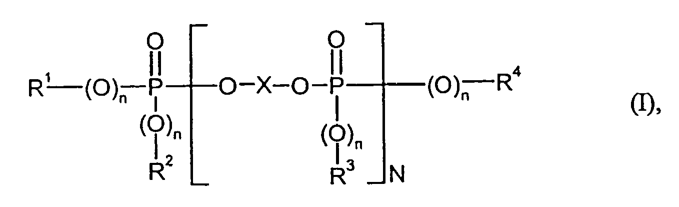 wherein
R¹, R², R³ and R⁴ independently of one another each denote C₁- to C₈-alkyl, or C₅- to C₆-cycloalkyl, C₆- to C₂₀-aryl or C₇- to C₁₂-aralkyl, in each case optionally substituted by alkyl,
n independently of one another, denotes 0 or 1,
N denotes a number between 0.1 and 10 and
X denotes a mono- or polynuclear aromatic radical having 6 to 30 C atoms, or a linear or branched aliphatic radical having 2 to 30 C atoms, which can be OH-substituted and can contain up to 8 ether bonds,
C) 0.01 to 0.7 parts by wt. of fluorinated polyolefin,
C.1) as a coagulated mixture with at least one vinyl (co)polymer, the fluorinated polyolefin C or polyolefin mixture being mixed as an emulsion with at least one emulsion of the components and the mixture then being coagulated.
or
C.2) as a masterbatch with at least one vinyl (co)polymer, the fluorinated polyolefin C being mixed as a powder with a powder or granules of the vinyl (co)polymer and the mixture being compounded in the melt, in general at temperatures of 208°C to 330°C, in the conventional units, such as internal kneaders, extruders or twin-shaft screws,
or
C.3) in the form of a formulation which is obtained by polymerizing suitable vinyl monomers in the presence of fluorinated polyolefin emulsions,
with the proviso that the vinyl (co)polymers employed are resinous, thermoplastic and rubber-free,
and
D) optionally further additives chosen from at least one from the group consisting of very finely divided inorganic compounds, fillers and reinforcing substances, lubricants and mould release agents, nucleating agents, antistatics, stabilizers, dyestuffs and pigments.

2. Composition according to claim 1, comprising 80 to 99 parts by wt. of polycarbonate.

3. Composition according to claim 1 or 2, comprising 0.7 to 15 parts by wt. of phosphorus compound of the formula (I).

4. Composition according to claims 1 to 3, comprising 0.05 to 0.5 parts by wt. of fluorinated polyolefin.

5. Composition according to claims 1 to 4, comprising fluorinated polyolefin, wherein the fluorinated polyolefin has been added as a powder in the form of a coagulated mixture with at least one vinyl (co)polymer or in the form of a precompound or masterbatch.

6. Composition according to claims 1 to 5, comprising phosphorus compounds of the formula (I) wherein R¹, R², R³ and R⁴ independently of one another represent C₁-C₄-alkyl, phenyl, naphthyl or phenyl-C₁-C₄-alkyl and the aromatic groups can be unsubstituted or substituted.

7. Composition according to claims 1 to 6, comprising phosphorus compounds of the formula (I) wherein X is derived from diphenols of the formula (II): 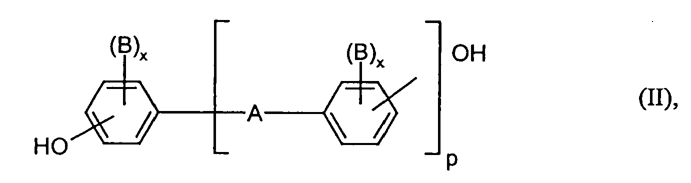 wherein
A denotes a single bond, C₁-C₅-alkylene, C₂-C₅-alkylidene, C₅-C₆-cycloalkylidene, -O-, -SO-, -CO-, -S-, -SO₂-, C₆-C₁₂-arylene, to which further aromatic rings optionally containing heteroatoms can be fused,
or a radical of the formula (III) or (IV) 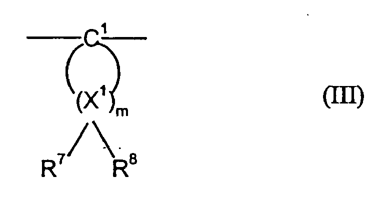 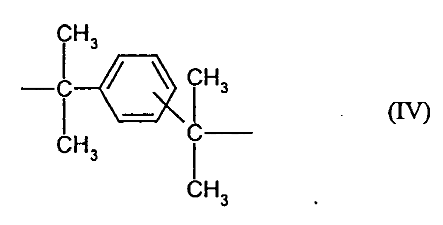
B in each case denotes C₁-C₁₂-alkyl or halogen,
x in each case independently of one another, denotes 0, 1 or 2 and
p is 1 or 0, and
R⁷ and R⁸ can be chosen individually for each X¹ and independently of one another denote hydrogen or C₁-C₆-alkyl,
X¹ denotes carbon and
m denotes an integer from 4 to 7,
with the proviso that on at least one atom X¹, R⁷ and R⁸ are simultaneously alkyl.

8. Composition according to claims 1 to 7, comprising phosphorus compounds of the formula (I) wherein N denotes 0.7 to 5.

9. Composition according to claims 1 to 8, comprising phosphorus compounds of the formula (I) wherein N denotes 0.7 to 3.

10. Composition according to claims 1 to 9, comprising a mixture of phosphates according to formula (I).

11. Composition according to claims 1 to 6, wherein X in formula (I) represents 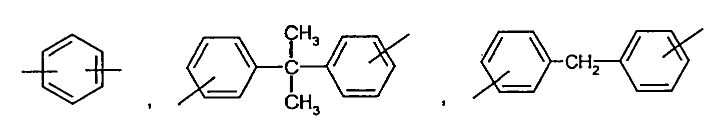 or

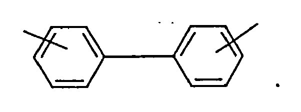

12. Composition according to claims 1 to 11, comprising as component B a mixture of tributyl phosphate, triphenyl phosphate, tricresyl phosphate, diphenyl cresyl phosphate, diphenyl octyl phosphate, diphenyl 2-ethylcresyl phosphate, tri-(isopropylphenyl) phosphate, methylphosphonic acid dimethyl ester, methylphosphonic acid diphenyl ester, phenylphosphonic acid diethyl ester, triphenylphosphine oxide or tricresylphosphine oxide with oligophosphates, wherein the range stated for N in claim 1 designates the average value of the mixture..

13. Composition according to claims 1 to 12, comprising 0.05 to 0.5 parts by wt. of component C.

14. Process for the preparation of the compositions according to claims 1 to 13, wherein the individual components are mixed and compounded.

15. Use of the compositions according to claims 1 to 13 for the production of shaped articles and mouldings.

16. Shaped articles and mouldings obtainable from compositions according to claims 1 to 13.

## Revendications

1. Composition consistant en
(A) 70 à 99,5 parties en poids d'un polycarbonate,
(B) 0,5 à 18 parties en poids d'un composé phosphoré répondant à la formule (I) 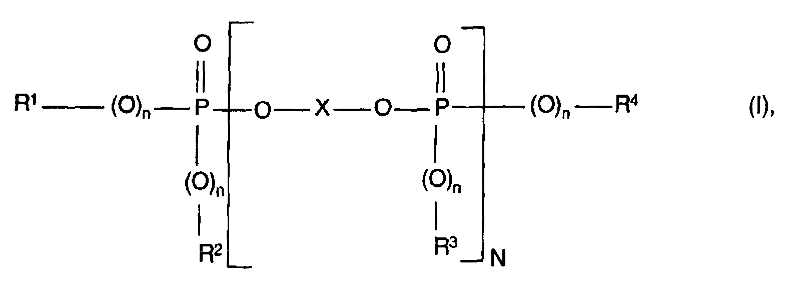 dans laquelle
R¹, R², R³ et R⁴ représentent chacun, indépendamment les uns des autres, un groupe alkyle en C₁-C₈ ou bien un groupe cycloalkyle en C₅-C₆, aryle en C₆-C₂₀, aralkyle en C₇-C₁₂, chacun d'eux éventuellement substitué par des groupes alkyle,
les indices n sont égaux chacun, indépendamment les uns des autres, à 0 ou 1,
N est un nombre allant de 0,1 à 10,
X représente un radical aromatique mono-ou poly-cyclique en C₆-C₃₀ ou un radical aliphatique linéaire ou ramifié en C₂-C₃₀, qui peut être substitué par des groupes OH et peut contenir jusqu'à 8 liaisons éther,
C) 0,01 à 0,7 partie en poids d'une polyoléfine fluorée,
C.1) à l'état de mélange coagulé avec au moins un (co)polymère vinylique, la polyoléfine fluorée C ou le mélange de polyoléfines ayant été mélangé à l'état d'émulsion avec au moins une émulsion des composants puis ensuite coagulé,
ou
C.2) à l'état de mélange-maître avec au moins un(co)polymère vinylique, la polyoléfine fluorée C ayant été mélangée à l'état de poudre avec une poudre ou un granulé du (co)polymère vinylique puis homogénéisée à l'état fondu en général à des températures allant de 208 à 330°C dans des appareils usuels tels que les malaxeurs internes, les extrudeuses ou les mélangeurs à deux vis,
ou bien
C.3) à l'état d'une composition qui a été obtenue par polymérisation de monomères vinyliques appropriés en présence d'émulsions de polyoléfines fluorées,
sous réserve que les (co)polymères vinyliques mis en oeuvre sont résineux, thermoplastiques et exempts de caoutchouc,
D) le cas échéant d'autres additifs choisis parmi au moins un additif du groupe consistant en les composés inorganiques à l'état de particules extrêmement fines, les matières de charge et les matières renforçantes, les agents lubrifiants et agents de démoulage, les agents de nucléation, les agents antistatiques, les stabilisants, les colorants et les pigments.

2. Composition selon la revendication 1, contenant 80 à 99 parties en poids d'un polycarbonate.

3. Composition selon la revendication 1 ou 2, contenant 0,7 à 15 parties en poids d'un composé phosphoré de formule (I).

4. Composition selon les revendications 1 à 3, contenant 0,05 à 0,5 parties en poids de polyoléfine fluorée.

5. Composition selon les revendications 1 à 4, contenant une polyoléfine fluorée, la polyoléfine fluorée ayant été ajoutée à l'état de poudre sous forme d'un mélange coagulé avec au moins un (co)polymère vinylique ou sous forme d'un prémélange ou d'un mélange-maître.

6. Composition selon les revendications 1 à 5, contenant des composés phosphorés de formule (I) dans laquelle R¹, R², R³ et R⁴ représentent chacun, indépendamment les uns des autres, un groupe alkyle en C₁-C₄, phényle, napthyle ou phényl-alkyle en C₁-C₄ et les groupes aromatiques sont substitués ou non.

7. Composition selon les revendications 1 à 6 contenant des composés phosphorés de formule (I) dans laquelle X dérive de diphénols de formule (II) : 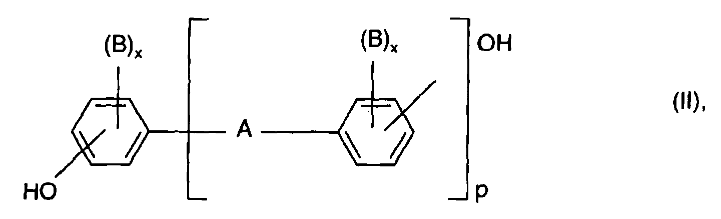 dans laquelle
A représente une liaison simple, un groupe alkylène en C₁-C₅, alkylidène en C₂-C₅, cycloalkylidène en C₅-C₆, -O-, -SO-, -CO-, -S-, -SO₂-, un groupe aryle en C₆-C₁₂ qui peut être condensé avec d'autres cycles aromatiques contenant le cas échéant des hétéroatomes,
ou bien un groupe de formule (III) ou (IV) 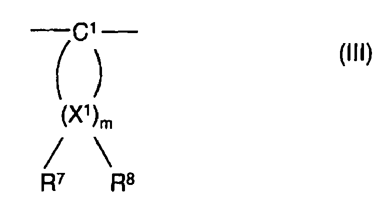 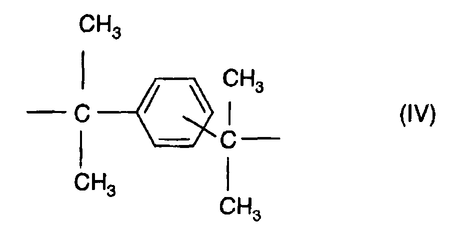 chacun des symboles B représente un groupe alkyle en C₁-C₁₂
ou un halogène,
les indices x sont égaux chacun, indépendamment les uns des autres, à 0,1 ou 2,
p est égal à 1 ou 0 et
R⁷ et R⁸, qui peuvent être choisis individuellement pour chacun des atomes X¹, représentent chacun, indépendamment l'un de l'autre, l'hydrogène ou un groupe alkyle en C₁-C₆,
X¹ représente le carbone et
m est un nombre entier allant de 4 à 7,
sous réserve que, sur au moins un atome X¹, R⁷ et R⁸ représentent tous deux des groupes alkyle.

8. Composition selon les revendications 1 à 7, contenant des composés phosphorés de formule (I) dans laquelle N est un nombre allant de 0,7 à 5.

9. Composition selon les revendications 1 à 8, contenant des composés phosphorés de formule (I) dans laquelle N est un nombre allant de 0,7 à 3.

10. Composition selon les revendications 1 à 9, contenant un mélange de phosphates de formule (I).

11. Composition selon les revendications 1 à 6, pour laquelle le symbole X de la formule I représente 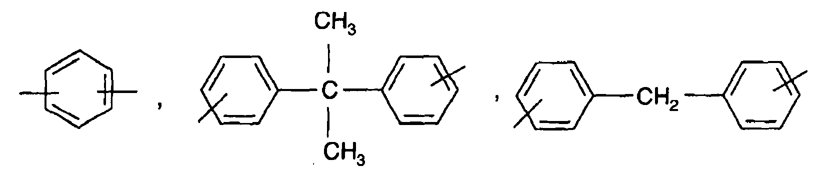 ou

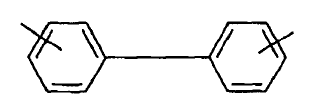

12. Composition selon les revendications 1 à 11, contenant en tant que composant B un mélange de phosphate de tributyle, de phosphate de triphényle, de phosphate de tricrésyle, de phosphate de diphényle et de crésyle, le phosphate de diphényle et d'octyle, de phosphate de diphényle et de 2-éthylcrésyle, de phosphate de tri(isopropylphényle), de méthylphosphonate de diméthyle, de méthylphosphinate de diphényle, de phénylphosphonate de diéthyle, d'oxyde de triphénylphosphine ou d'oxyde de tricrésylphosphine et d'oligophosphates, l'intervalle de valeur donné pour N dans la revendication 1 représentant la valeur moyenne pour le mélange.

13. Composition selon les revendications 1 à 12, contenant 0,05 à 0,5 partie en poids du composant C.

14. Procédé pour la préparation des compositions selon les revendications 1 à 13, selon lequel on mélange les composants individuels et on homogénéise.

15. Utilisation des compositions selon les revendications 1 à 13 pour la fabrication d'objets moulés et de pièces moulées.

16. Objets moulés et pièces moulées obtenus à partir de compositions selon les revendications 1 à 13.
